# EUROPÄISCHE PATENTSCHRIFT

(11) **EP 0 642 630 B1**
(45) Veröffentlichungstag und Bekanntmachung des Hinweises auf die Patenterteilung: **03.12.1997**
(21) Anmeldenummer: 94911923.4
(22) Anmeldetag: 18.03.1994
(51) Int. Cl.: F16B 7/14, F16M 11/26

(54) **KLEMMVORRICHTUNG**
CLAMPING DEVICE
DISPOSITIF DE SERRAGE

(30) Priorität: 30.03.1993 DE 4310355
(43) Veröffentlichungstag der Anmeldung: 15.03.1995
(73) Patentinhaber: SONOR JOHS. LINK GmbH, D-57319 Bad Berleburg (DE)
(72) Erfinder: SASSMANNSHAUSEN, Werner, D-57319 Bad Berleburg-Berghausen (DE); SASSMANNSHAUSEN, Werner, D-57319 Bad Berleburg-Wingeshausen (DE); KLEINDIENST, Anke, D-57319 Bad Berleburg (DE)
(74) Vertreter: Müller, Gerd, Dipl.-Ing.
(86) Internationale Anmeldenummer: EP9400861
(87) Internationale Veröffentlichungsnummer: WO9423215

(56) Entgegenhaltungen:
- DE-A- 3 000 536
- FR-A- 1 443 259
- US-A- 1 447 519

## Beschreibung

Die Erfindung betrifft eine Klemmvorrichtung zum Festlegen eines axial verschiebbaren Stabes in beliebigen Einstellagen, bei der sich ein Rollkörper zur Klemmung an einem umgebenden Gehäuse abstützt und zwischen dem Gehäuse und dem Stab festgeklemmt ist; hierbei versteht es sich, daß in kinematischer Umkehrung alternativ die Klemmvorrichtung gelöst und relativ zu dem Gegenstand bzw. Stab verschoben und festgelegt werden könnte. Derartige Klemmvorrichtungen dienen dazu, z. B. ein Stativ, ein Ständerbein oder einen ähnlichen Träger bzw. Halter oder Anbauteil für Geräte, insbesondere Percussions-Musikinstrumente, in gewünschten Lagen bzw. Positionen festzulegen.

Klemmvorrichtungen an Schlaginstrumenten, gleich ob sie zur Lagenfixierung der längenveränderbaren Beine oder zur höhenverstellbaren Halterung der Instrumententeile, bspw. des beweglichen Beckentellers von Beckenmaschinen, dienen, sind erheblichen stoßweisen Belastungen ausgesetzt. Außerdem wirken die Eigenschwingungen des Instrumentes noch längere Zeit nach dem Anschlagen auf die Klemmvorrichtungen ein. Die Teile, die mittels der Klemmvorrichtung verbunden werden, müssen sich daher in ihrer Lage zueinander sicher fixieren lassen, um zu verhindern, daß während des Spielens Lageveränderungen auftreten, die ein Nachstellen erforderlich machen würden. Aus der DE-A-30 00 536 ist eine Klemmvorrichtung zur Fixierung beliebiger Einstellagen eines koaxial auf einer Stange oder dergleichen verschiebbar geführten Halteelementes an Schlaginstrumenten, insbesondere zur höhenverstellbaren Halterung von Becken, Beckenmaschinen, Trommeln usw. der eingangs genannten Art bekannt, wobei das Halteelement eine die Stange umschließende, sich in Beanspruchungsrichtung verjüngende Kammer mit gegensätzlich geneigten Wänden aufweist. Zwischen der Kammerinnenwand und der Stange sind die Klemmung bewirkende, mindestens zylindrische Abschnitte besitzende Rollkörper angeordnet, deren Mittenbereich der Profilform der Stange - die z. B. einen runden, sechseckigen oder achteckigen Querschnitt besitzen kann - angepaßt ist. Auf eine oberhalb der Rollen angeordnete Platte wirkt eine in das Gehäuse einschraubbare, mit einem Rändelkopf versehene Stellschraube ein, und eine unterhalb der Rollen angeordnete untere Platte stützt sich auf einer Druckfeder ab.

Der Erfindung liegt die Aufgabe zugrunde, eine gattungsgemäße Klemmvorrichtung einfacher zu gestalten.

Diese Aufgabe wird erfindungsgemäß dadurch gelöst, daß der Rollkörper in einem Hebelkopf eines an seinem von dem Hebelkopf abgewandten Ende einen durch das Gehäuse nach außen hindurchgeführten Druckknopf aufweisenden Hebels angeordnet ist und einem innen als schiefe Ebene ausgebildeten Wandabschnitt des Gehäuses sowie an dem Stab anliegt. Der Erfindung liegt hierbei die Erkenntnis zugrunde, daß sich einerseits die Klemmung durch einfaches Niederdrücken des von dem Hebelkopf abgewandten Hebelendes aufheben läßt und andererseits durch die sich an der schiefen Ebene - nach dem Entlasten des Hebelendes-einstellende Selbsthemmung eine den Anforderungen voll entsprechende, sichere Klemmung des axial verschiebbaren Stabes bzw. der Klemmvorrichtung erreichen läßt.

Eine Ausgestaltung der Erfindung sieht vor, daß der Hebel aus zwei zueinander parallelen Armen besteht, die an ihrem einen Ende über einen Quersteg des Hebelkopfes und über den an den anderen Armenden in diagonaler Lage zu dem Quersteg angeordneten Druckknopf miteinander verbunden sind. Der Druckknopf, der vorteilhaft in einer Innenkammer eine sich gegen den Stab abstützende Druckfeder aufnehmen kann, ragt aus dem Gehäuse hervor. Drückt eine Bedienungsperson den Druckknopf gegen die Kraft der Druckfeder ein, wird die an der schiefen Ebene ansonsten von der Gegenkraft der Druckkraft bewirkte Selbsthemmung aufgehoben, woraufhin sich die notwendigen Stellbewegungen durchführen lassen. Ist die gewünschte Einstellage erreicht, braucht der Druckknopf lediglich losgelassen zu werden, so daß sich aufgrund der Kräftesituation dann wieder die selbsthemmende Anlage des Rollenkörpers an der schiefen Ebene ergibt.

Es wird vorgeschlagen, daß der Hebelkopf schwenkbeweglich auf in den gegenüberliegenden Gehäusewänden angeordneten Achsen gelagert ist. Nach dem Einsetzen des Hebels in das Gehäuse, daß zu diesem Zweck vorteilhaft an seiner von dem Druckknopf abgewandten Seite offen ist, lassen sich die Achsen durch Gehäusebohrungen hindurch bis ihnen in den beiden Armen des Hebels zugewandten Bohrungen stecken.

Es empfiehlt sich, daß der Rollkörper lose in offene Ausnehmungen der Arme des doppelarmigen Hebels eingelegt ist. Der unterhalb des Druckknopfes sowie zwischen dem Rollkörper und dem Quersteg des Hebelkopfes in das Gehäuse - das Durchtrittsöffnungen in den entsprechenden Wandteilen aufweist-gesteckte Stab befindet sich somit in einem rollenden Kontakt mit dem sich an die schiefe Ebene der Innenwand des Gehäuses anlegenden Rollkörper.

Weitere Merkmale und Vorteile der Erfindung ergeben sich aus den Ansprüchen und der nachfolgenden Beschreibung, in der ein Ausführungsbeispiel des Gegenstandes der Erfindung näher erläutert ist. Es zeigen:
- Figur 1: einen Querschnitt der erfindungsgemäßen Klemmvorrichtung, im geklemmten Zustand dargestellt;
- Figur 2: die Klemmvorrichtung nach Figur 1 in der Draufsicht, entlang der Linie II-II geschnitten;
- Figur 3: eine der Figur 1 entsprechende Darstellung der Klemmvorrichtung, im gelösten Zustand gezeigt; und
- Figur 4: die erfindungsgemäße Klemmvorrichtung als integrierter Bestandteil einer Bass-DrumSpitze einer im einzelnen nicht dargestellten Trommel gezeigt.

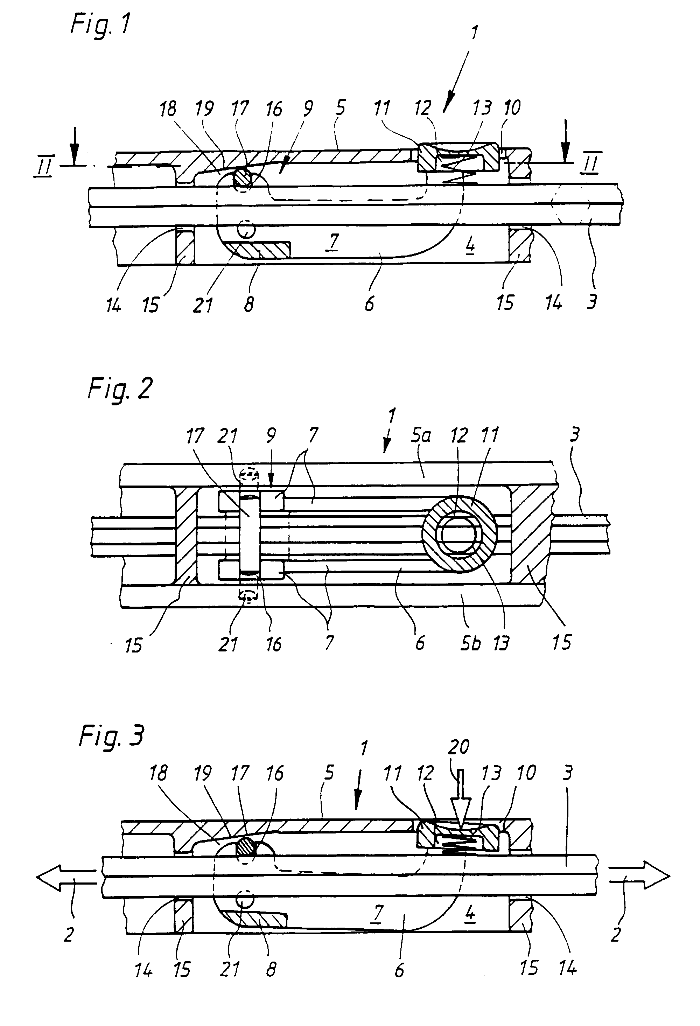

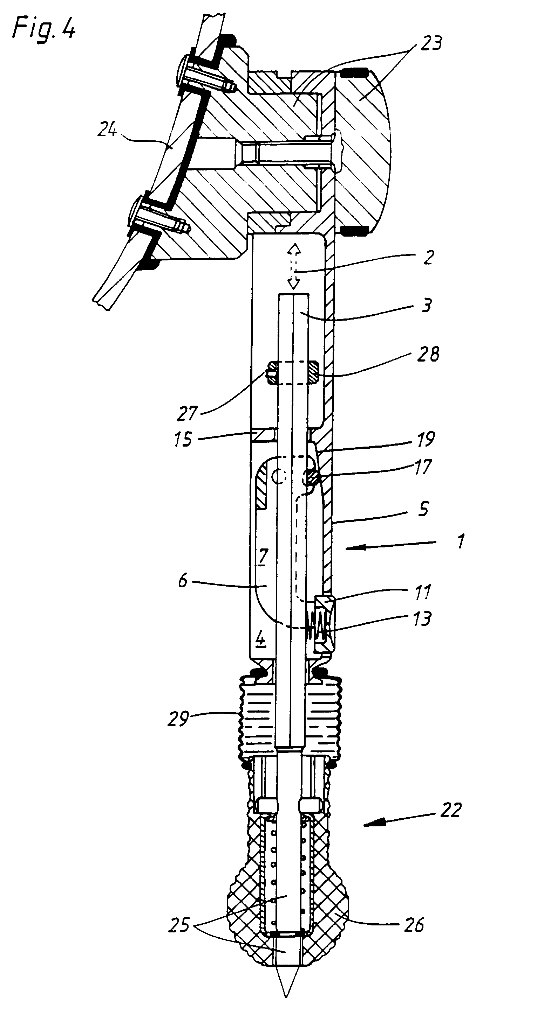

Eine Klemmvorrichtung 1 zum Festlegen beliebiger Einstellagen eines in Richtung des Doppelpfeils 2 (vgl. Fig. 3 und 4) hinund herbeweglichen, im Querschnitt sechseckigen Stabes 3, besteht aus einem in einer Gehäusekammer 4 eines Gehäuses 5 angeordneten doppelarmigen Hebel 6.

Die beiden parallel zueinander verlaufenden Arme 7 sind an ihrem einen Ende über einen Quersteg 8 miteinander verbunden und bilden dort einen Hebelkopf 9; an ihrem anderen Ende sind die Arme 7 über einen durch eine Gehäuseöffnung 10 nach außen vorragenden, zylindrischen Druckknopf 11 miteinander verbunden, der in diagonaler Lage zu dem Quersteg 8 angeordnet ist. Eine von einer Innenkammer 12 des Druckknopfes 11 aufgenommene Druckfeder 13 stützt sich mit ihrem freien Ende auf den durch Durchbrechungen 14 in den Gehäuse- und Stützwänden 15 koaxial zu dem Gehäuse 5 hindurchgesteckten Stab 3 ab, wodurch eine leichte Bremswirkung auf den Stab 3 ausgeübt wird. Der Stab 3 kann sich somit nicht durch sein Eigengewicht in axialer Richtung verstellen. Der Hebelkopf 9 besitzt an seinem von dem Quersteg 8 abgewandten, oberen Enden offene Ausnehmungen 16, in die ein zylindrischer Rollkörper 17 lose eingelegt ist (vgl. Fig. 2). Der Rollkörper 17 liegt an einem als schiefe Ebene 19 ausgebildeten Wandabschnitt des Gehäuses 5 an. In der in Figur 1 gezeigten Klemmlage übt die Druckfeder 13 eine den Druckkopf 11 nach außen beaufschlagende Kraft aus, dessen Gegenkraft an der schiefen Ebene 19 der Gehäusewand eine Selbsthemmung bewirkt, dergestalt, daß der Rollkörper 17 den Stab 3 unverrückbar festklemmt.

Zum Lösen der Klemmung wird der Druckknopf 11 - wie in Figur 3 gezeigt - in Pfeilrichtung 20 gegen die Kraft der Druckfeder 13 in das Gehäuse 5 eingedrückt, wobei sich der doppelarmige Hebel 6 um Achsen 21 verschwenkt. Diese sind in sich gegenüberliegenden Wänden 5a, 5b des Gehäuses 5 angeordnet (vgl. Fig. 2) und ragen bis in Ausnehmungen hinein, die in den am Hebelkopf 9 verdickten Enden der Arme 7 des Hebels 6 vorgesehen sind. Bei diesem Verschwenken wird die Selbsthemmung an der schiefen Ebene 19 aufgehoben, damit der Rollkörper bzw. die Walze 17 gelöst und der Stab 3 zum axialen Verschieben in eine gewünschte Einstellage freigegeben. Ist die Einstellage erreicht, braucht der Druckknopf 11 lediglich losgelassen zu werden, worauf sich der in Figur 1 dargestellte Zustand der Klemmung selbsttätig einstellt.

In Figur 4 ist die Anwendung der Klemmvorrichtung 1 anhand einer Bass-Drum-Spitze 22 gezeigt, die über eine Halterung 23 am Resonatormantel 24 einer weiter nicht dargestellten Bass-Drum befestigt ist. Das Ständerbein bzw. die Bass-Drum-Spitze 22 stellt in diesem Fall gleichzeitig das an seiner dem Rollkörper 17 zugewandten Seite als schiefe Ebene 19 ausgebildete Gehäuse 5 dar, und der Stab 3 ist an seinem freien Ende mit einer für einen sicheren Halt der aufgestellten Bass-Drum sorgenden Spitze 25 versehen. Diese läßt sich durch einen relativ zu dem Stab 3 bzw. der Spitze 25 verschiebbaren Gummifuß 26 abweichend von der Darstellung nach Figur 4 in eine in den Gummifuß 26 zurückgezogene, geschützte Lage bewegen, ohne daß zu diesem Zweck die Klemmvorrichtung 1 gelöst und der Stab 3 mit der Spitze 25 verschoben werden muß. Soll die Bass-Drum-Spitze 22 aber ingesamt verlängert oder verkürzt werden, ist es erforderlich, die Klemmvorrichtung 1 in der beschriebenen Weise zu lösen, worauf sich der Stab 3 gemäß dem Doppelpfeil 2 in entsprechender Richtung axial verschieben läßt. Zum Begrenzen des die Bass-Drum-Spitze 22 verlängernden Verstellweges ist auf das von der Spitze 25 abgewandte, hintere Ende des Stabes 3 ein verstellbarer, mit einer Schraube 27 in einer gewünschten Lagefixierung festlegbarer Anschlagring 28 aufgesetzt. Ein zwischen dem Gummifuß 26 und dem Gehäuse 5 der Bass-Drum-Spitze 22 angeordneter Faltenbalg 29 umhüllt das aus dem Gehäuse 5 vorragende Ende des Stabes 3 und paßt sich den Längenänderungen selbsttätig an.

### Liste der Bezugszeichen

- 1: Klemmvorrichtung
- 2: Doppelpfeil
- 3: Stab
- 4: Gehäusekammer
- 5: Gehäuse
- 5a, 5b: Gehäusewand
- 6: Hebel
- 7: Arm
- 8: Quersteg
- 9: Hebelkopf
- 10: Gehäuseöffnung
- 11: Druckknopf
- 12: Innenkammer
- 13: Druckfeder
- 14: Durchbrechung
- 15: Gehäuse- und Stützwand
- 16: Ausnehmung
- 17: Rollkörper
- 18: Außenfläche
- 19: schiefe Ebene
- 20: Pfeil
- 21: Achse
- 22: Bass-Drum-Spitze
- 23: Halterung
- 24: Resonatormantel
- 25: Spitze
- 26: Gummibalg
- 27: Schraube
- 28: Anschlagring
- 29: Faltenbalg

## Patentansprüche

1. Klemmvorrichtung (1) zum Festlegen eines axial verschiebbaren Stabes (3) in beliebigen Einstellagen, bei der sich ein Rollkörper (17) zur Klemmung an einem umgebenden Gehäuse (5) abstützt und zwischen dem Gehäuse und dem Stab geklemmt ist, **dadurch gekennzeichnet,** daß der Rollkörper (17) in einem Hebelkopf (9) eines an seinem von dem Hebelkopf (9) abgewandten Ende einen durch das Gehäuse (5) nach außen hindurchgeführten Druckknopf (11) aufweisenden Hebels (6) angeordnet ist und einem innen als schiefe Ebene (19) ausgebildeten Wandabschnitt des Gehäuses (5) sowie an dem Stab (3) anliegt.

2. Klemmvorrichtung nach Anspruch 1, **dadurch gekennzeichnet,** daß der Hebel (6) aus zwei zueinander parallelen Armen (7) besteht, die einerseits an ihrem einen Ende über einen Quersteg (8) des Hebelkopfes (9) und andererseits über den an den anderen Armenden in diagonaler Lage zu dem Quersteg (8) angeordneten Druckknopf (11) miteinander verbunden sind.

3. Klemmvorrichtung nach Anspruch 1 oder 2, **dadurch gekennzeichnet,** daß der Hebelkopf (9) schwenkbeweglich auf in gegenüberliegenden Gehäusewänden (5a, 5b) angeordneten Achsen (21) gelagert ist.

4. Klemmvorrichtung nach einem oder mehreren der Ansprüche 1 bis 3, **dadurch gekennzeichnet,** daß der Rollkörper (17) lose in offene Ausnehmungen (16) der Arme (7) des Hebels (6) eingelegt ist.

5. Klemmvorrichtung nach einem oder mehreren der Ansprüche 1 bis 4, **dadurch gekennzeichnet,** daß der Druckknopf (11) in einer Innenkammer (12) eine sich gegen den Stab (3) abstützende Druckfeder (13) aufnimmt.

6. Klemmvorrichtung nach einem oder mehreren der Ansprüche 1 bis 5, **dadurch gekennzeichnet,** daß das Gehäuse (5) an seiner von dem Druckknopf (11) abgewandten Seite offen ist.

## Claims

1. Clamping device (1) for fixing an axially displaceable rod (3) in any desired setting positions, in which a rotatable body (17) is, for clamping, supported at a surrounding housing (5) and is clamped between the housing and the rod, characterised thereby that the rollable body (17) is arranged in a lever head (9) of a lever (6), which has at its end remote from the lever head (9) a pushbutton (11) guided outwardly through the housing (5), and bears against an inner wall portion, which is formed as an inclined plane, of the housing (5) as well as against the rod (3).

2. Clamping device according to claim 1, characterised thereby that the lever (6) consists of two mutually parallel arms (7), which on the one hand are connected together at their one end by way of a transverse web (8) of the lever head (9) and on the other hand are connected together by way of the pushbutton (11), which is arranged at the other arm ends in diagonal position with respect to the transverse web (8).

3. Clamping device according to claim 1 or 2, characterised thereby that the lever head (9) is mounted to be pivotably movable on axles (21) arranged in oppositely disposed housing walls (5a, 5b).

4. Clamping device according to one or more of claims 1 to 3, characterised thereby that the rollable body (17) is loosely laid into open recesses (16) of the arms (7) of the lever (6).

5. Clamping device according to one or more of claims 1 to 4, characterised thereby that the pushbutton (11) receives, in an inner chamber, a compression spring (13) supported against the rod (3).

6. Clamping device according to one or more of claims 1 to 5, characterised thereby that the housing is open at its side remote from the pushbutton (11).

## Revendications

1. Dispositif de serrage (1) pour fixer une tige (3) susceptible de se déplacer axialement, dans des positions de réglage quelconques, dans lequel un corps de roulement (17) s'appuie, pour le serrage, contre un boîtier (5) qui l'entoure, et est serré entre le boîtier et la tige, caractérisé en ce que le corps de roulement (17) est agencé dans une tête de levier (9) d'un levier (6) qui comporte à son extrémité détournée de la tête de levier (9) un bouton-poussoir (11) qui traverse le boîtier (5) jusqu'à l'extérieur, et s'appuie contre un tronçon de paroi du boîtier (5) réalisé à l'intérieur sous forme d'un plan oblique (19), ainsi que contre la tige (3).

2. Dispositif de serrage selon la revendication 1, caractérisé en ce que le levier (6) est constitué de deux bras (7) parallèles l'un à l'autre, qui sont reliés d'une part à l'une de leurs extrémités au moyen d'une barrette transversale (8) de la tête de levier (9) et d'autre part au moyen du bouton-poussoir (11) agencé à l'autre extrémité des bras dans une situation en diagonale par rapport à la barrette transversale (8).

3. Dispositif de serrage selon l'une ou l'autre des revendications 1 et 2, caractérisé en ce que la tête de levier (9) est montée mobile en rotation sur des axes (21) agencés dans des parois opposées du boîtier (5a, 5b).

4. Dispositif de serrage selon l'une ou plusieurs des revendications 1 à 3, caractérisé en ce que le corps de roulement (19) est placé de façon lâche dans des évidements ouverts (16) des bras (7) du levier (6).

5. Dispositif de serrage selon l'une ou plusieurs des revendications 1 à4, caractérisé en ce que le bouton-poussoir (11) reçoit dans une chambre intérieure (12) un ressort de compression (13) qui s'appuie contre la tige (3).

6. Dispositif de serrage selon l'une ou plusieurs des revendications 1 à 5, caractérisé en ce que le boîtier (5) est ouvert sur son côté détourné du bouton-poussoir (11).
